# EUROPÄISCHE PATENTANMELDUNG

(11) **EP 2 287 475 A2**
(43) Veröffentlichungstag der Anmeldung: **23.02.2011**
(21) Anmeldenummer: 10401133.3
(22) Anmeldetag: 10.08.2010
(51) Int. Cl.: F16B 13/06

(54) **Befestigungselement und Verfahren zur Befestigung eines Gegenstandes**

(30) Priorität: 22.08.2009 DE 102009038568; 05.07.2010 DE 102010017722
(71) Anmelder: fischerwerke GmbH & Co. KG, 72178 Waldachtal (DE)
(72) Erfinder: Hacker, Oliver, 72160 Horb (DE); Kaupp, Andreas, 72280 Dornstetten (DE); Seibold, Günter, 72178 Waldachtal-salzstetten (DE)

(57) **Zusammenfassung**

Die Erfindung betrifft ein Befestigungselement (1) sowie ein Verfahren zur Befestigung eines Gegenstandes (2) an einem Verankerungsgrund (3). Das erfindungsgemäße Befestigungselement (1) weist einen Schaft (5) auf, an den sich ein Verankerungsabschnitt (7) zum Verankern des Befestigungselements (1) in dem Verankerungsgrund (3) anschließt. Am Befestigungselement (1) ist ein erstes Lastangriffsmittel (4) zur Befestigung des Gegenstandes (2) am Verankerungsgrund (3) angeordnet, das einstückig mit dem Schaft (5) ist. Um ein Befestigungselement (1) und ein Verfahren zur Befestigung eines Gegenstandes (2) mit dem Befestigungselement (1) zu schaffen, das kostengünstig ist, aber dennoch eine einfache Demontage und eine erneute Befestigung des befestigten Gegenstandes (2) zulässt, schlägt die Erfindung vor, dass am Befestigungselement (1) ein zweites Lastangriffsmittel (10) zwischen dem Verankerungsabschnitt (7) und dem ersten Lastangriffsmittel (4) angeordnet ist, und dass das Befestigungselement (1) derart gestaltet ist, dass das erste Lastangriffsmittel (4) an einer ersten Solltrennstelle (12) vom Befestigungselement (1) abtrennbar ist, so dass der Gegenstand (2) mit dem zweiten Lastangriffsmittel (10) befestigbar ist.

## Beschreibung

Die Erfindung betrifft ein Befestigungselement mit den Merkmalen des Oberbegriffs des Anspruchs 1 und ein Verfahren zur Befestigung eines Gegenstandes mit dem Befestigungselement.

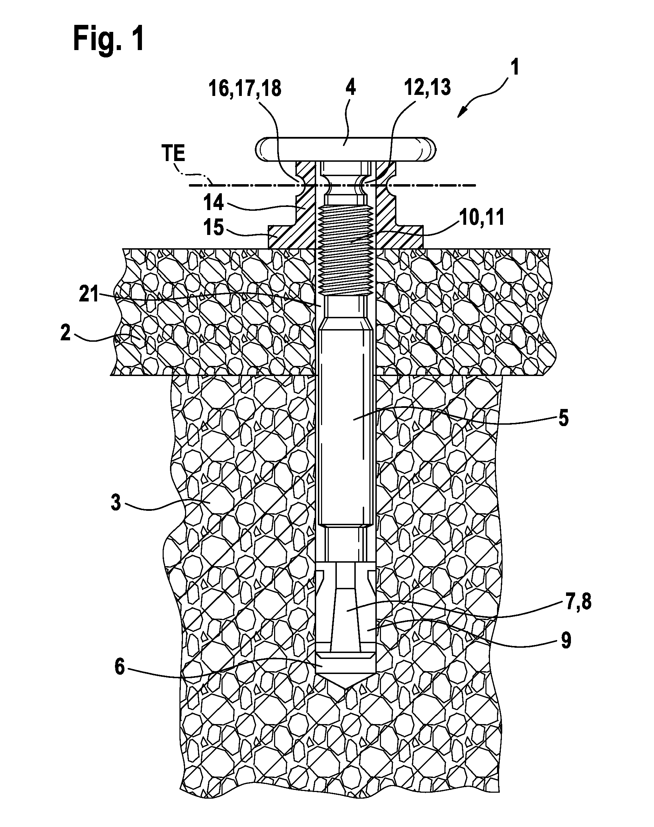

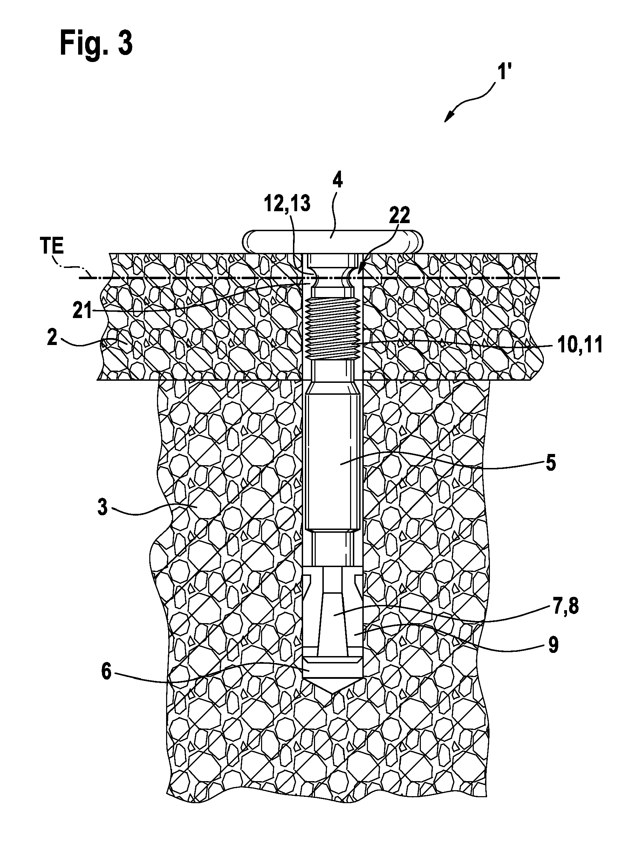

Ein derartiges Befestigungselement ist beispielsweise ein sogenannter Nagelanker zur Befestigung eines Gegenstandes an einem Verankerungsgrund. Der Verankerungsgrund ist beispielsweise eine Wand oder eine Decke aus Beton, in der das Befestigungselement verankert wird. Die Offenlegungsschrift EP 0 207 254 A1 zeigt einen Nagelanker mit einem Schaft, an dem ein Verankerungsabschnitt zum Verankern des Befestigungselements in dem Verankerungsgrund angeordnet ist. Der Verankerungsabschnitt umfasst einen Spreizkonus, an dem eine Spreizhülse angeordnet ist. Die Spreizhülse wird beim Einbringen des Befestigungselements in ein im Verankerungsgrund erstelltes Bohrloch verspannt und durch den Spreizkonus aufgeweitet, wodurch das Befestigungselement in dem Verankerungsgrund sicher verankert wird. Am hinteren Ende des Nagelankers ist ein Lastangriffsmittel angeordnet, das als Gewindeabschnitt (Figur 1 der Offenlegungsschrift) zum Aufschrauben einer Mutter oder in der Form eines Nagelkopfs (Figur 3 der Offenlegungsschrift) ausgebildet ist. Das Lastangriffsmittel dient dazu, einen Gegenstand am Verankerungsgrund zu befestigen. Wird beispielsweise zur Befestigung einer Holzlatte ein Nagelanker mit einem Nagelkopf verwendet, so wird die Holzlatte zunächst durchbohrt und ein Bohrloch im Verankerungsgrund erstellt. Der Nagelanker wird dann in das Bohrloch eingeschlagen, mittels des Verankerungsabschnitts im Verankerungsgrund verankert und dabei die Holzlatte mit dem nagelkopfförmigen Lastangriffsmittel gegen den Verankerungsgrund verspannt und befestigt.

Ein weiterer Anwendungsfall, bei denen derartige Befestigungselemente häufig eingesetzt werden, ist die Anbringung von Brandschutzplatten im Tunnelbau. Da im Tunnelbau sehr hohe Anforderungen an den Korrosionswiderstand der Befestigungselemente gestellt werden, und die Herstellung von Muttern aus hochlegierten Edelstählen, wie beispielsweise aus Edelstahl 1.4401 oder aus Edelstahl 1.4529, relativ aufwändig ist und die Muttern daher teuer sind, werden Nagelanker mit einer nagelkopfförmigen Ausbildung des Lastangriffsmittels für diesen Anwendungsfall bevorzugt. Allerdings wird häufig die Anforderung gestellt, dass eine Brandschutzplatte für Kontrollzwecke demontierbar und wieder befestigbar sein muss, beispielsweise um den hinter der Platte liegenden Tübbing auf eindringendes Wasser zu kontrollieren, wobei zu Projektbeginn noch nicht eindeutig festgelegt werden kann, welche Brandschutzplatte demontiert werden muss. Somit wird vorsorglich das relativ teure Befestigungselement mit Außengewinde und Mutter im Masseneinsatz verwendet, was unwirtschaftlich ist und unnötige Kosten verursacht, da in der Praxis tatsächlich nur einige wenige Platten demontiert und wieder befestigt werden müssen.

Aufgabe der Erfindung ist es daher, ein Befestigungselement und ein Verfahren zur Befestigung eines Gegenstandes mit dem Befestigungselement vorzuschlagen, das kostengünstig ist, aber dennoch eine einfache Demontage und eine erneute Befestigung des befestigten Gegenstandes zulässt.

Diese Aufgabe wird erfindungsgemäß durch ein Befestigungselement mit den Merkmalen des Anspruchs 1 sowie durch ein Verfahren zur Befestigung eines Gegenstandes mit den Merkmalen des Anspruchs 8 gelöst.

Das erfindungsgemäße Befestigungselement zur Befestigung eines Gegenstandes an einem Verankerungsgrund weist einen Schaft auf, mit einem Verankerungsabschnitt zum Verankern des Befestigungselements in dem Verankerungsgrund. Der Schaft ist insbesondere einteilig und als massives Bauteil ausgeführt. Der Verankerungsabschnitt umfasst beispielsweise einen Spreizkonus, an dem eine Spreizhülse angeordnet ist, die aber nicht Bestandteil des Schafts ist. Alternativ kann der Verankerungsabschnitt beispielsweise ein Gewinde, Rillen oder mehrere Konen aufweisen und/oder derart ausgebildet sein, dass sich das Befestigungselement mittels einer Mörtelmasse in einem Bohrloch im Verankerungsgrund verankern lässt. Am Befestigungselement ist ein erstes Lastangriffsmittel zur Befestigung eines Gegenstandes am Verankerungsgrund angeordnet. Das erste Lastangriffsmittel ist einstückig mit dem Schaft und dient dazu, Kräfte vom Gegenstand aufzunehmen und auf das Befestigungselement und somit über den Verankerungsabschnitt in den Verankerungsgrund zu übertragen. Das erste Lastangriffsmittel ist beispielsweise am Schaft angeordnet.

Kennzeichnend für das erfindungsgemäße Befestigungselement ist, dass am Schaft ein zweites Lastangriffsmittel angeordnet ist, das sich zwischen dem Verankerungsabschnitt und dem ersten Lastangriffsmittel befindet. Das erste Lastangriffsmittel bildet beispielsweise das hintere Ende des Befestigungselements, während der Verankerungsabschnitt das vordere Ende bildet. Hierbei beziehen sich die Begriffe "vorne" und "hinten" auf die Einbringrichtung des Befestigungselements in ein im Verankerungsgrund eingebrachtes Bohrloch beziehungsweise in eine in den Gegenstand eingebrachte Durchgangsbohrung. Das Befestigungselement ist erfindungsgemäß zudem derart gestaltet, dass das erste Lastangriffsmittel an einer Solltrennstelle vom Befestigungselement abtrennbar ist, so dass der Gegenstand mit dem zweiten Lastangriffsmittel befestigbar ist.

Zum Anbringen des Gegenstandes an dem Verankerungsgrund wird zunächst eine Durchgangsbohrung im Gegenstand und ein Bohrloch im Verankerungsgrund erstellt, wobei die Durchgangsbohrung und das Bohrloch in einem Verfahrensschritt hergestellt werden können. Das Befestigungselement wird dann durch die Durchgangsbohrung in das Bohrloch eingebracht und im Verankerungsgrund mittels des Verankerungsabschnitts verankert. Hierdurch wird der Gegenstand erstmalig, in einem ersten Montagezustand, mit dem ersten Lastangriffsmittel am Verankerungsgrund befestigt. Das erste Lastangriffsmittel ist aber vom Schaft des Befestigungselements abtrennbar. Soll der Gegenstand, beispielsweise für Kontrollzwecke, vom Verankerungsgrund entfernt werden, so wird das erste Lastangriffsmittel vom Befestigungselement entfernt beziehungsweise abgetrennt. Der Gegenstand kann dann erneut mittels des zweiten Lastangriffsmittels am Verankerungsgrund befestigt werden. Die Befestigungsanordnung, also das Befestigungselement und der Gegenstand, befinden sich dann in einem zweiten Montagezustand. Das Befestigungselement bleibt während des ganzen Vorgangs im Verankerungsgrund verankert. Dies bedeutet, dass im ersten Montagezustand im Wesentlichen oder ausschließlich das erste Lastangriffsmittel zur Befestigung des Gegenstandes wirkt und im zweiten Montagezustand das zweite Lastangriffsmittel diese Funktion übernimmt.

Das erfindungsgemäße Befestigungselement kann insbesondere derart ausgebildet sein, dass in dem ersten Montagezustand, in dem das erste Lastangriffsmittel den Gegenstand am Untergrund befestigt, das zweite Lastangriffsmittel ganz oder teilweise abgedeckt und geschützt ist, wobei das zweite Lastangriffsmittel in diesem Zustand nicht zur Befestigung des Gegenstands verwendet werden kann. Insbesondere kann sich das zweite Lastangriffsmittel im ersten Montagezustand innerhalb der Durchgangsbohrung im zu befestigenden Gegenstand befinden, so dass der Gegenstand das zweite Lastangriffsmittel schützt. In diesem Fall kann es zum erneuten Befestigen des Gegenstandes notwendig sein, dass die Durchgangsbohrung aufgeweitet wird, so dass das zweite Lastangriffsmittel zugänglich ist. Zum Aufweiten der Durchgangsbohrung kann der Gegenstand vom Verankerungsgrund entfernt werden, wobei ein Aufweiten insbesondere im Bereich des Bohrlochmundes der Durchgangsbohrung erfolgt, also auf der im Montagezustand vom Verankerungsgrund abgewandten Seite der Durchgangsbohrung, die im Montagezustand dem Anwender direkt zugänglich ist.

Die erste Solltrennstelle definiert den Ort, an dem das erste Lastangriffsmittel planmäßig vom Schaft abtrennbar ist, ohne dass das zweite Lastangriffsmittel dadurch beschädigt und möglicherweise unbrauchbar wird. Die erste Solltrennstelle kann derart angeordnet sein, dass mit dem ersten Lastangriffsmittel ein Teil des Schafts abgetrennt wird. Die erste Solltrennstelle kann als eine definierte Stelle oder als ein größerer Bereich oder als ein Abschnitt am Schaft ausgebildet sein. Insbesondere ist die Solltrennstelle als umlaufende, gerundete oder halbkreisförmige nutartige Vertiefung ausgeführt. Dies hat den Vorteil, dass, wenn das erste Lastangriffsmittel an der Nut abgetrennt wird, der verbleibende Teil der Nut am hinteren Ende des Schafts des Befestigungselements eine gewindefreie, zentrierende Ansetzfläche für eine Mutter bildet, wodurch die Mutter zum erneuten Befestigen des Gegenstandes problemlos montiert werden kann.

Das erfindungsgemäße Befestigungselement ermöglicht eine Demontage und eine wiederholte Montage des zu befestigenden Gegenstandes und kann kostengünstig hergestellt werden, beispielsweise durch Kaltmassivumformung aus Edelstahl.

Vorzugsweise ist das erste Lastangriffsmittel nagelkopfförmig ausgebildet, so dass das erfindungsgemäße Befestigungselement sehr einfach und kostengünstig durch Umformen herstellbar ist. "Nagelkopfförmig" bedeutet, dass das erste Lastangriffsmittel im Durchmesser gegenüber dem Schaft erweitert ist. Bei einem nicht-kreisförmigen Querschnitt des Schafts beziehungsweise des ersten Lastangriffsmittels ist mit "Durchmesser" der Durchmesser eines den Querschnitt umschreibenden Kreises gemeint. Das erste Lastangriffsmittel kann beispielsweise als scheibenförmiger Kopf am hinteren Ende des Befestigungselements ausgestaltet sein, wie dies bei den bekannten Nagelankern der Fall ist.

Bevorzugt ist zudem, dass das zweite Lastangriffsmittel ein Gewindeabschnitt ist. Nach dem Abtrennen des ersten Lastangriffsmittels ist der Gewindeabschnitt frei zugänglich, so dass zum erneuten Befestigen des Gegenstandes eine Mutter auf den Gewindeabschnitt aufgeschraubt werden kann. Dies hat den Vorteil, dass nach einer einmaligen Demontage der Gegenstand beliebig oft durch Abschrauben der Mutter vom Gewindeabschnitt demontiert und dann wieder durch Aufschrauben der Mutter auf den Gewindeabschnitt montiert werden kann. Falls der Gewindeabschnitt, vom Gegenstand gegen Beschädigungen geschützt, innerhalb der Durchgangsbohrung angeordnet ist, so kann es notwendig sein, dass vor dem Aufdrehen der Mutter die Durchgangsbohrung im Bereich des Bohrlochmundes der Durchgangsbohrung aufgeweitet wird, so dass die Mutter das Gewinde greifen kann. Die Mutter kann dann gegen den nicht geweiteten Teil der Durchgangsbohrung verspannt werden. Alternativ kann eine Mutter verwendet werden, die einen Bund aufweist, mit dem sie direkt oder indirekt mittels einer Unterlegscheibe gegen die dem Verankerungsgrund abgewandte Seite des Gegenstands verspannt werden kann.

Bei einer weiteren bevorzugten Ausgestaltungsform des erfindungsgemäßen Befestigungselements ist im ersten Montagezustand am Befestigungselement ein Distanzelement angeordnet. Das Distanzelement ist derart gestaltet, dass es das zweite Lastangriffsmittel zumindest teilweise überdeckt. Das Distanzelement ist insbesondere derart gestaltet, dass es sowohl am zu befestigenden Gegenstand als auch am ersten Lastangriffsmittel anliegt und Druckkräfte zwischen dem Gegenstand und dem ersten Lastangriffsmittel überträgt. Da das Distanzelement das zweite Lastangriffsmittel zumindest teilweise überdeckt, ist das zweite Lastangriffsmittel, beispielsweise ein Gewindeabschnitt, durch die Distanzhülse gegen Beschädigungen geschützt. Das Distanzelement kann beim erstmaligen Befestigen in der Art einer Unterlegscheibe am Befestigungselement angeordnet werden oder auch schon vor der Montage des Befestigungselements am Befestigungselement angeordnet sein. Das Distanzelement ist beispielsweise mit dem Schaft oder dem ersten Lastangriffsmittel verbunden. Das Distanzelement kann nach dem Entfernen des ersten Lastangriffsmittels vom Befestigungselement entfernbar sein, falls dies notwendig ist, damit das zweite Lastangriffsmittel zugänglich wird. Beispielsweise ist das Distanzelement hülsenförmig als Kunststoffring oder als Metallhülse ausgestaltet. Das Distanzelement hat den Vorteil, dass die Solltrennstelle nicht innerhalb des Gegenstandes angeordnet sein muss, sondern im Bereich des Distanzelements, also zwischen Gegenstand und erstem Lastangriffsmittel. Damit kann die Solltrennstelle gut zugänglich für den Anwender angeordnet werden.

Bei einer weiteren bevorzugten Ausgestaltungsform des erfindungsgemäßen Befestigungselements weist das Distanzelement eine Lagemarkierung für die erste Solltrennstelle auf. Da das Distanzelement das zweite Lastangriffsmittel zumindest teilweise abdeckt, zeigt die Lagemarkierung dem Anwender, wo das erste Lastangriffsmittel vom Schaft abzutrennen ist, damit das zweite Lastangriffsmittel nicht beschädigt wird und planmäßig verwendet werden kann.

Bevorzugt ist, dass am Distanzelement eine zweite Solltrennstelle angeordnet ist, die zur ersten Solltrennstelle korrespondiert. Insbesondere korrespondiert die Lage der ersten Solltrennstelle mit der Lage der zweiten Solltrennstelle. Beispielsweise ist die zweite Solltrennstelle eine nutartige Vertiefung, die an einem als Distanzhülse ausgebildeten Distanzelement angeordnet ist. Die nutartige Vertiefung übernimmt zudem die Funktion der Lagemarkierung. An der nutartigen Vertiefung kann beispielsweise ein Bolzenschneider angesetzt werden, mit dem das Distanzelement an der Solltrennstelle durchtrennt wird. Da die Lage der ersten Solltrennstelle mit der Lage der zweiten Solltrennstelle korrespondiert, wird mit dem Bolzenschneider auch das erste Lastangriffsmittel an der dafür vorgesehenen Stelle vom Schaft abgetrennt. Das zweite Lastangriffsmittel bleibt dabei unbeschädigt und kann planmäßig zum erneuten Befestigen des Gegenstands verwendet werden.

Die Erfindung wird nachfolgend anhand eines in der Zeichnung dargestellten Ausführungsbeispiels näher erläutert.

Es zeigen:
- Figur 1: ein erstes erfindungsgemäßes Befestigungselement in einem ersten Montagezustand in einer Schnittdarstellung;
- Figur 2: das erste erfindungsgemäße Befestigungselement in einem zweiten Montagezustand in einer Schnittdarstellung;
- Figur 3: ein zweites erfindungsgemäßes Befestigungselement in einem ersten Montagezustand in einer Schnittdarstellung; und
- Figur 4: das zweite erfindungsgemäße Befestigungselement in einem zweiten Montagezustand in einer Schnittdarstellung.

In Figur 1 ist ein erstes erfindungsgemäßes Befestigungselement 1 in einem ersten Montagezustand dargestellt. Mit dem Befestigungselement 1 ist ein Gegenstand 2, hier eine Brandschutzplatte, an einem Verankerungsgrund 3, hier einem Tübbing aus Beton, befestigt. Das Befestigungselement 1 weist ein erstes Lastangriffsmittel 4 auf, das als nagelkopfförmige Scheibe ausgebildet und einstückig mit einem zylinderförmigen Schaft 5 des Befestigungselements 1 ist. Das erste Lastangriffsmittel 4 bildet ein hinteres Ende des Befestigungselements 1, wobei der Schaft 5 in Einbringrichtung vor dem ersten Lastangriffsmittel 4 angeordnet ist. Die "Einbringrichtung" ist dabei die Richtung, in die das Befestigungselements 1 in ein Bohrloch 6 eingebracht wird, das im Verankerungsgrund 3 erstellt wurde. Zum Erstellen des Bohrlochs 6 wurde der Gegenstand 2 durchbohrt, so dass der Gegenstand 2 eine Durchgangsbohrung 21 aufweist, durch die das Befestigungselement 1 in das Bohrloch 6 eingebracht wird. Der Schaft 5 des Befestigungselements 1 weist einen gegenüber dem ersten Lastangriffsmittel 4 reduzierten Durchmesser auf. Der Schaft 5 umfasst einen Verankerungsabschnitt 7, der ein vorderes Ende des Befestigungselements 1 bildet und einen kegelstumpfförmigen Spreizkonus 8 aufweist, an dem eine Spreizhülse 9 angeordnet ist. Zwischen dem Verankerungsabschnitt 7 und dem ersten Lastangriffsmittel 4 ist ein zweites Lastangriffsmittel 10 in Form eines Gewindeabschnitts 11 ausgeformt. Hinter dem zweiten Lastangriffsmittel 10, im Übergangsbereich zwischen dem Schaft 5 und dem ersten Lastangriffsmittel 4, ist eine erste Solltrennstelle 12 angeordnet, die als eine erste nutartige Vertiefung 13 umlaufend am Schaft 5 ausgebildet ist. An der ersten Solltrennstelle 12 ist das erste Lastangriffsmittel 4 vom Befestigungselement 1 abtrennbar, so dass der Gegenstand 2 demontiert werden kann.

Der über den Gegenstand überstehende Gewindeabschnitt 11 ist von einem Distanzelement 14, das am Befestigungselement 1 angeordnet ist, teilweise überdeckt. Das Distanzelement 14 ist als hohlzylindrische Hülse ausgebildet und aus Kunststoff hergestellt. Das Distanzelement 14 weist an seinem vorderen Ende einen umlaufenden kreisringförmigen Bund 15 auf, mit dem sich das Distanzelement 14 am zu befestigenden Gegenstand 2 abstützt. An seinem hinteren Ende ist am Distanzelement 14 eine zweite nutartige Vertiefung 16 als zweite Solltrennstelle 17 angeordnet, deren Lage mit der Lage der ersten Solltrennstelle 12 korrespondiert. Beide Solltrennstellen 12, 17 weisen im Wesentlichen den gleichen Abstand von dem zu befestigenden Gegenstand 2 auf. Die zweite nutartige Vertiefung 16 ist zudem eine Lagemarkierung 18, die die Lage der ersten Solltrennstelle 12, die auf Grund des Distanzelements 14 nicht sichtbar ist, optisch markiert.

Zum erstmaligen Befestigen des Gegenstandes 2 wird das Befestigungselement 1 in das Bohrloch 6 so weit eingeschlagen, bis das als Unterlegscheibe am Befestigungselement 1 angeordnete Distanzelement 14 vom nagelkopfförmigen ersten Lastangriffsmittel 4 gegen den Gegenstand 2 gedrückt wird. Beim Einschlagen verklemmt sich die Spreizhülse 9 im Bohrloch 6 und wird vom Spreizkonus 8 gespreizt. Das Befestigungselement 1 ist im Verankerungsgrund 3 verankert und der Gegenstand 2 ist am Verankerungsgrund 3 befestigt. Diese Einbausituation stellt den ersten Montagezustand dar. Soll nun der Gegenstand 2 demontiert werden, so wird beispielsweise ein nicht dargestellter Bolzenschneider an der zweiten nutartigen Vertiefung 16, d. h. an der zweiten Solltrennstelle 17 angesetzt und sowohl das Distanzelement 14 als auch das Befestigungselement 1 an den Solltrennstellen 12, 17 entlang der Trennebene TE durchtrennt. Durch die als Lagemarkierung 18 dienende zweite nutartige Vertiefung 16 kann der nicht dargestellte Bolzenschneider lagegenau angesetzt werden, so dass beim Abtrennen des ersten Lastangriffsmittels 4 vom Schaft 5 das zweite Lastangriffsmittel 10 nicht beschädigt wird, obwohl die erste Solltrennstelle 12 für den Anwender nicht sichtbar ist. Die Trennebene TE liegt dabei außerhalb des Gegenstandes 2, so dass ein einfaches Ansetzen des Bolzenschneiders möglich ist. Nach dem Abtrennen des ersten Lastangriffsmittels 4 kann der Gegenstand 2 vom Verankerungsgrund 3 gelöst werden.

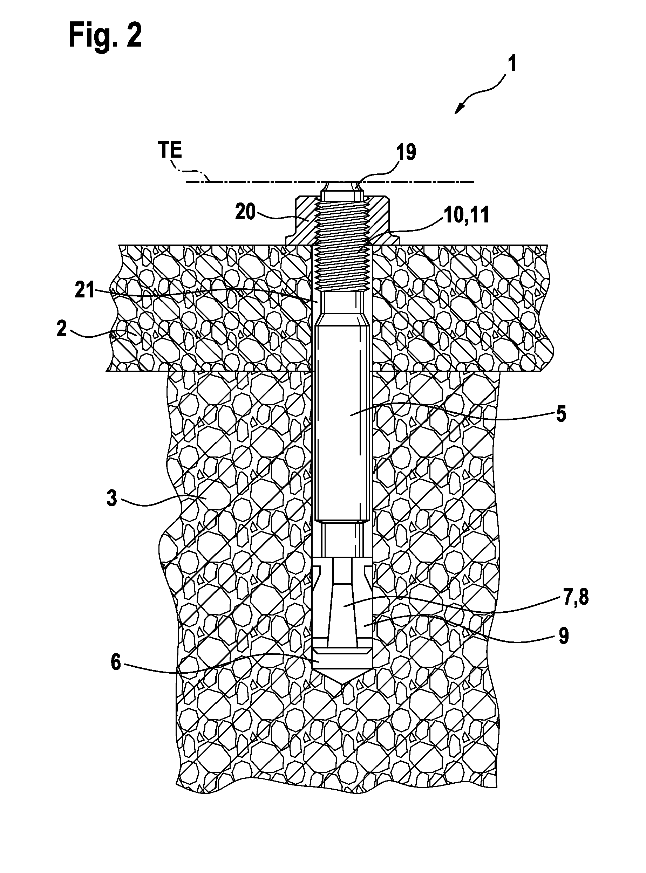

Um den Gegenstand 2 erneut in einem zweiten Montagezustand an dem Verankerungsgrund 3 zu befestigen, wird das durch das Abtrennen des ersten Lastangriffsmittels 4 nun frei zugängliche zweite Lastangriffsmittel 10 verwendet, wie dies in Figur 2 dargestellt ist. Die erste nutartige Vertiefung 13 bildet nach dem Abtrennen ihres oberen, mit dem ersten Lastangriffsmittel 4 verbundenen Teils, eine gewindefreie Ansetzfläche 19 für eine Mutter 20. Entsprechend wird das durchtrennte Distanzelement 14 nicht erneut aufgesetzt. Die Trennebene TE definiert nun das hintere Ende des Befestigungselements 1. Zur Befestigung des Gegenstands 2 am Verankerungsgrund 3 wird die Mutter 20 auf das zweite Lastangriffsmittel 10, den über den Gegenstand überstehenden Gewindeabschnitt 11, aufgeschraubt und gegen den Gegenstand 2 verspannt. Damit ist der Gegenstand 2 erneut am Verankerungsgrund 3 befestigt. Für eine wiederholte Demontage des Gegenstands 2 lässt sich die Mutter 20 erneut vom Befestigungselement 1 lösen.

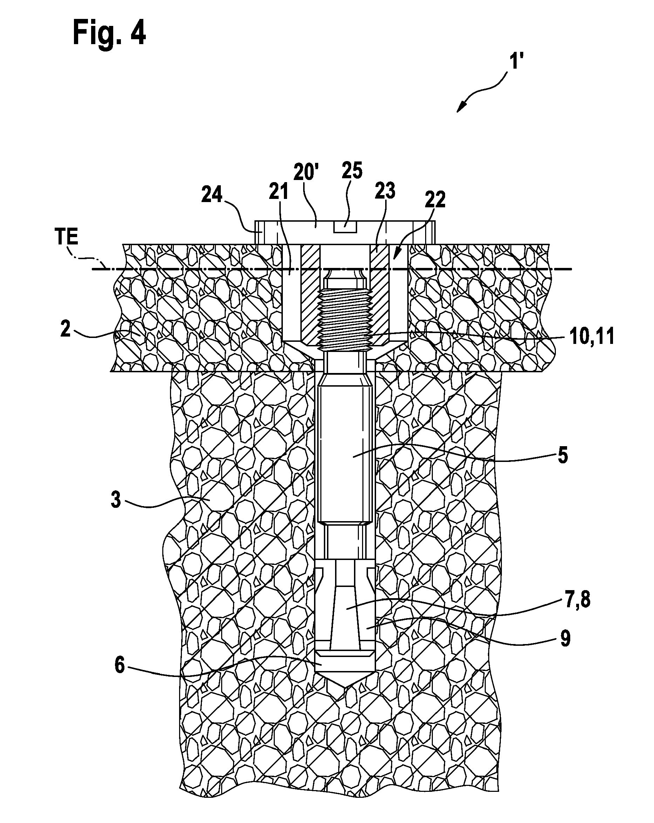

Die in den Figuren 3 und 4 dargestellte alternative Befestigungsanordnung unterscheidet sich von der in den Figuren 1 und 2 dargestellten Befestigungsanordnung dadurch, dass das Befestigungselement 1' kein Distanzelement aufweist und das als Nagelkopf ausgeführte erste Lastangriffsmittel 4 direkt auf dem Gegenstand 2 aufliegt und gegen den Verankerungsgrund 3 presst. Somit befindet sich das zweite Lastangriffsmittel 10 und die erste Solltrennstelle 12 des Befestigungselements 1' innerhalb der Durchgangsbohrung 21, so dass der Gegenstand 2 das zweite Lastangriffsmittel 10 gegen Beschädigungen schützt. Die Trennebene TE liegt in diesem Fall innerhalb des Gegenstands 2 oberflächennah im Bereich des Bohrlochmundes 22 der Durchgangsbohrung 21. Das Abtrennen des ersten Lastangriffsmittels 4 erfolgt in diesem Fall beispielsweise mit einem Winkelschleifer. Nach dem Abtrennen kann der Gegenstand 2 vom Verankerungsgrund 3 entfernt werden, beispielsweise zur Kontrolle des Verankerungsgrundes 3. Die erneute Befestigung des Gegenstands 2 am Verankerungsgrund 3 erfolgt in diesem Fall ebenfalls mit einer Mutter 20', die auf das als Gewindeabschnitt 11 ausgeformte zweite Lastangriffsmittel 10 aufgeschraubt wird. Da das zweite Lastangriffsmittel 10 aber innerhalb der Durchgangsbohrung 21 liegt, deren Innendurchmesser nur unwesentlich größer als der Außendurchmesser des Gewindeabschnitts 11 ist, ist es notwendig, die Durchgangsbohrung 21, zumindest im Bereich des Bohrlochmundes 22, so zu weiten, dass die Mutter 20' in die Durchgangsbohrung 21 eingeführt und auf den Gewindeabschnitt 11 aufgeschraubt werden kann, wie dies in Figur 4 dargestellt ist. Das Aufweiten erfolgt an dem demontierten Gegenstand 3, beispielsweise durch ein Aufbohren der Durchgangsbohrung 21 mit einem Bohrer mit entsprechend großem Durchmesser (nicht dargestellt). Die Mutter 20' besteht aus einer einseitig offenen Innengewindehülse 23, wobei das offene Ende den Gewindeabschnitt 11 aufnimmt und das Innengewinde der Innengewindehülse 23 mit dem Außengewinde des Gewindeabschnitts 11 korrespondiert. An dem geschlossenen Ende der Mutter 20' ist ein umlaufender Bund 24 in Form eines Sechskants angeordnet, mit dem die Mutter 20' auf dem Gegenstand 2 aufliegt und diesen gegen den Verankerungsgrund 3 presst. Zusätzlich kann unter dem Bund 24 eine Unterlegscheibe (nicht dargestellt) mit großem Durchmesser angeordnet werden, beispielsweise um Beschädigungen des Gegenstands 2 im Bereich des Bohrlochmundes 22 zu überdecken, die beim Abtrennen des ersten Lastangriffsmittels 4 entstanden sind. Alternativ kann der Bund 24 entsprechend groß ausgeführt werden. Als Ergänzung zum sechskantförmigen Bund 24 ist eine Werkzeugaufnahme 25 für einen nicht dargestellten Schraubendreher vorgesehen, so dass der Gegenstand 2 mittels der Mutter 20' erneut gegen den Verankerungsgrund 3 verspannt werden kann.

Die erfindungsgemäßen Befestigungselemente 1, 1' lassen sich aus hochlegierten Stählen relativ kostengünstig herstellen, beispielsweise durch Umformen. Die relativ teuren Muttern 20, 20' werden nur dann verwendet, wenn der Gegenstand 2 tatsächlich vom Verankerungsgrund 3 gelöst und erneut am Verankerungsgrund 3 befestigt werden muss, so dass eine demontierbare Befestigungsanordnung kostengünstig realisierbar ist.

### Bezugszeichenliste

### Befestigungselement und Verfahren zur Befestigung eines Gegenstandes

- 1, 1': Befestigungselement
- 2: Gegenstand
- 3: Verankerungsgrund
- 4: erstes Lastangriffsmittel
- 5: Schaft
- 6: Bohrloch
- 7: Verankerungsabschnitt
- 8: Spreizkonus
- 9: Spreizhülse
- 10: zweites Lastangriffsmittel
- 11: Gewindeabschnitt
- 12: erste Solltrennstelle
- 13: erste nutartige Vertiefung
- 14: Distanzelement
- 15: kreisringförmiger Bund
- 16: zweite nutartige Vertiefung
- 17: zweite Solltrennstelle
- 18: Lagemarkierung
- 19: gewindefreie Ansetzfläche
- 20, 20': Mutter
- 21: Durchgangsbohrung
- 22: Bohrlochmund
- 23: Innengewindehülse
- 24: Bund
- 25: Werkzeugaufnahme
- TE: Trennebene

## Patentansprüche

1. Befestigungselement (1) zur Befestigung eines Gegenstandes (2) an einem Verankerungsgrund (3),
- mit einem Schaft (5), an dem ein Verankerungsabschnitt (7) zum Verankern des Befestigungselements (1) in dem Verankerungsgrund (3) angeordnet ist,
- wobei am Befestigungselement (1) ein erstes Lastangriffsmittel (4) zur Befestigung des Gegenstandes (2) am Verankerungsgrund (3) angeordnet ist, und
- wobei das erste Lastangriffsmittel (4) mit dem Schaft (5) einstückig ist,
**dadurch gekennzeichnet,**
- **dass** am Befestigungselement (1) ein zweites Lastangriffsmittel (10) zwischen dem Verankerungsabschnitt (7) und dem ersten Lastangriffsmittel (4) angeordnet ist, und
- **dass** das Befestigungselement (1) derart gestaltet ist, dass das erste Lastangriffsmittel (4) an einer ersten Solltrennstelle (12) vom Befestigungselement (1) abtrennbar ist, so dass der Gegenstand (2) mit dem zweiten Lastangriffsmittel (10) befestigbar ist.

2. Befestigungselement nach Anspruch 1, **dadurch gekennzeichnet, dass** das erste Lastangriffsmittel (4) nagelkopfförmig ist.

3. Befestigungselement nach Anspruch 1 oder 2, **dadurch gekennzeichnet, dass** das zweite Lastangriffsmittel (10) ein Gewindeabschnitt (11) ist.

4. Befestigungselement nach einem der Ansprüche 1 bis 3, **dadurch gekennzeichnet, dass** am Befestigungselement (1) ein Distanzelement (14) angeordnet ist, das derart gestaltet ist, dass das Distanzelement (14) das zweite Lastangriffsmittel (10) zumindest teilweise überdeckt.

5. Befestigungselement nach Anspruch 4, **dadurch gekennzeichnet, dass** das Distanzelement (14) eine Lagemarkierung (18) für die erste Solltrennstelle (12) aufweist.

6. Befestigungselement nach Anspruch 4 oder 5, **dadurch gekennzeichnet, dass** am Distanzelement (14) eine zweite Solltrennstelle (17) angeordnet ist, die zur ersten Solltrennstelle (12) korrespondiert.

7. Befestigungselement nach einem der Ansprüche 4 bis 6, **dadurch gekennzeichnet, dass** die erste Solltrennstelle (12) und/oder die zweite Solltrennstelle (17) als nutartige Vertiefung ausgebildet ist.

8. Verfahren zum Anbringen eines Gegenstandes (2) an einem Verankerungsgrund (3) mit einem Befestigungselement (1) nach einem der Ansprüche 1 bis 7, wobei das Verfahren zumindest folgende Schritte umfasst:
- Erstellen einer Durchgangsbohrung (21) im Gegenstand (2) und eines Bohrlochs (6) im Verankerungsgrund (3);
- Einbringen des Befestigungselements (1) in die Durchgangsbohrung (21) und das Bohrloch (6);
- Verankern des Befestigungselements (1) in dem Verankerungsgrund (3) mittels des Verankerungsabschnitts; (7)
- erstmaliges Befestigen des Gegenstandes (2) an dem Verankerungsgrund (3) mittels des ersten Lastangriffsmittels (4);
- Entfernen des ersten Lastangriffsmittels (4) vom Befestigungselement (1); und
- erneutes Befestigen des Gegenstandes (2) an dem Verankerungsgrund (3) mittels des zweiten Lastangriffsmittels (10).

9. Verfahren nach Anspruch 8, das zusätzlich folgenden Schritt umfasst:
- Aufweiten der Durchgangsbohrung (21), zumindest im Bereich ihres Bohrlochmundes (22).
